# EUROPEAN PATENT SPECIFICATION

(11) **EP 3 105 626 B1**
(45) Date of publication and mention of the grant of the patent: **04.11.2020**
(21) Application number: 14704585.0
(22) Date of filing: 14.02.2014
(51) Int. Cl.: G02B 6/44, H02G 3/08, H02G 15/013

(54) **A PORT SEALING DEVICE AND ASSEMBLY FOR AN OPTICAL CABLE TERMINATION BOX**
DICHTUNGSTÜLLE FÜR EINE OPTISCHE VERBINDUNGSDOSE
JOINT POUR PASSAGE DE CÂBLE D'UNE BOÎTE DE TERMINAISON OPTIQUE

(43) Date of publication of application: 21.12.2016
(73) Proprietor: Prysmian S.p.A., 20126 Milano (IT)
(72) Inventor: ABBIATI, Fabio, I-20126 Milano (IT)
(74) Representative: Perani & Partners S.p.A.
(86) International application number: PCT/EP2014/052895
(87) International publication number: WO 2015/120901

(56) References cited:
- EP-A2- 2 216 867
- US-A- 5 886 300
- US-A1- 2007 216 110
- US-A1- 2013 328 271

## Description

### Field of the invention

The present invention relates to the field of equipments and components for the installation of optical cables in optical (access) networks. In particular, the present invention relates to a port sealing device and assembly for an optical cable termination box.

### Background of the invention

A FTTH ("Fiber To The Home") network is an optical access network providing a number of end users with broadband communication services, i.e. with services requiring data transmission at a very high rate, for example of some Mbit/s.

Typically, a FTTH network comprises a distribution box or cabinet which cooperates with an access network and which is typically located in the basement of the building where the end users reside. An optical trunk cable, hereinafter referred to as "riser cable", exits the distribution box and runs through the building from the basement up to all the building floors.

At each floor of the building, the riser cable may be optically connected to one or more optical cables, hereinafter referred to as "drop cables". Each drop cable typically terminates at its far end into a respective customer optical termination box located within or in proximity of the apartment or office of an end user.

During installation of the optical termination box, the operator has to lay down the drop cable from a distribution cabinet to the apartment of the end user where the operator has to cut the drop cable and connect the optical fibres to optical connectors by means of optical fibre splices.

The termination boxes are provided with a plurality of ports located in the peripheral wall of the box which are used for causing the fibre cable to enter the box.

When not in use, the ports must be closed by a respective removable device, usually a grommet, in order to guarantee the tightness of the inner space of the termination box and the formation of a passage for the insertion of the cable when this latter has to be installed.

EP 1434327 discloses a standard one piece rubber grommet for axial cable insertion where the cable can be caused to pass trough it after a portion of the grommet has been removed and a hole has been formed. The hole is formed by making use of a scissor or other suitable cutting tool.

US 2005084226 discloses a two pieces grommet comprising a ring and a closure cap which operates as a sealing member. When the cable has to be passed through the grommet, it is necessary to remove the closure cap before.

US 2009058018 discloses a two pieces grommet which allows the cable to be positioned inside the box without the need of being axially inserted through a hole. The sealing device comprises a compression mechanism with a first and a second gel grommets mounted on first and second housing parts, respectively. The first and second gel grommets are so shaped to circumferentially wrap the cable in order to limit its axial displacement. US 20130328271 discloses a port sealing device comprising two bodies, defining a passage there between when the bodies are placed one on the other, and multiple independent blind plugs, sealing said passage. Flexible and frangible bridges are connecting the independent blind plugs to either one of the bodies.

### Summary of the invention

The Applicant has perceived that the solution proposed in EP 1434327 needs a cutting tool for forming the hole and that the optical cable can enter the termination box only by passing axially through the hole.

The Applicant has also perceived that according to the solution disclosed in US 2005084226, for the installation of the cable, the cap has to be removed and that the cable has to be inserted axially through the hole. Moreover, this solution is suitable for fixed diameters.

The Applicant has also perceived that the solution disclosed in US 2009058018 needs a large number of different pieces for realizing the grommet and it is therefore extremely complex.

In view of the above, the Applicant has tackled the problem of providing a port sealing device for optical cable termination boxes which guarantees a high sealing effect when the cable is not present through the port without the need of a cutting tool for the preparation of the passage for the cable when this latter is to be connected inside the box.

The Applicant has therefore found that it is convenient to have a port sealing device allowing a transversal cable insertion without any need to access to the cable end which can be already connected to its terminal.

Therefore, the present invention relates to a port sealing device for housing an optical cable when passing through a peripheral wall of a termination box comprising two bodies defining a passage therebetween when the bodies are placed one on the other, a removable plug sealing said passage and flexible and frangible bridges connecting the plug to the two bodies.

In particular, the port sealing device is movable between an open configuration, wherein the two bodies are arranged in line and separated by the plug, and a closed configuration, wherein the two bodies are facing each other defining a substantially cylindrical passage with the plug inserted therein to close such cylindrical passage.

Advantageously, the bridges connecting the plug to the first and second bodies, extend from the plug to the respective body along opposite directions. In this way, the two bodies may pivot about the plug by bending the bridges causing the plug to remain in between.

Preferably, the first and second bodies are box shaped, each body being provided on a face thereof with an outwardly open channel axially extending through the entire thickness of each body forming said passage when the first and the second bodies rest one on the other with the respective open channels faced one another.

According to the invention, the cross section of the passage has a size configured to receive an optical cable.

Preferably the outwardly open channels have an inner surface which is shaped with a plurality of flexible indentations and the indentations are axially distributed on the inner surface of the channel.

According to the invention, the flexible and frangible bridges connecting said plug to said first and second bodies, are configured to allow an angular movement of the plug with respect to each one of the bodies of at least 90°.

Preferably, the flexible and frangible bridges comprise at least one stress raiser.

The present invention also relates to an optical termination box according to any of the claims 8 to 12.

### Brief description of the drawings

The present invention will now be described in more detail hereinafter with reference to the accompanying drawings, in which some embodiments of the invention are shown.
FIG. 1 is a schematic perspective view of a termination box in open position showing sealing port devices in their location in the peripheral wall of the box, one of which is partially disassembled,
FIG. 2 is a schematic perspective view, showing in an enlarged scale a portion of FIG. 1,
FIG. 3 is a schematic front view of a row of sealing ports in a portion of the peripheral wall of a termination box,
FIG. 4 is a schematic perspective view of a first embodiment of a port sealing device according to the invention taken from one side thereof,
FIG. 5 is a schematic perspective view of the port sealing device of FIG 4, taken from the reverse side,
FIG. 6 is a schematic perspective view of a second embodiment of a port sealing device according to the invention taken from one side thereof,
FIG. 7 is a schematic perspective view of the port sealing device of FIG 6, taken from the reverse side,
FIG. 8 is a schematic perspective view of a third embodiment of a port sealing device according to the invention.

### Detailed description

For the purposes of the present description and claims an optical cable is deemed to be any optical cable comprising one or more optical fibre units, an outer sheath and, optionally, flexible strength members.

A fibre unit is defined as an assembly comprising one (or more) optical fibre(s) which is constituted by a glass core, a glass cladding, a single or dual coating layer and an outer layer surrounding the said one (or more) optical fibre(s) in order to protect the overall optical fibre(s) from damage.

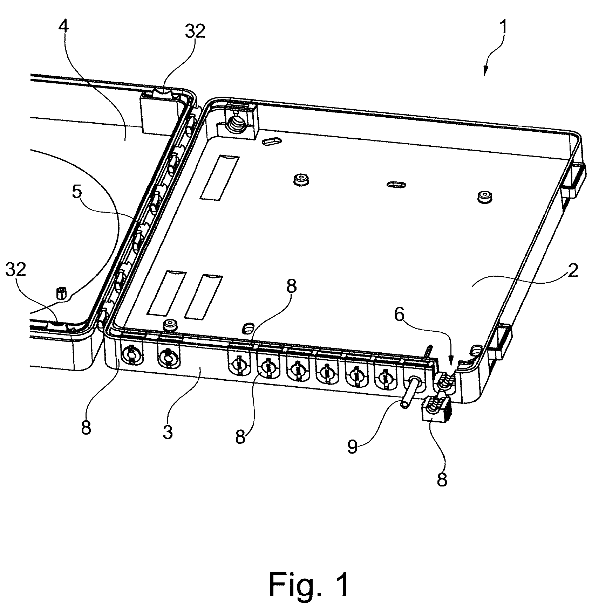

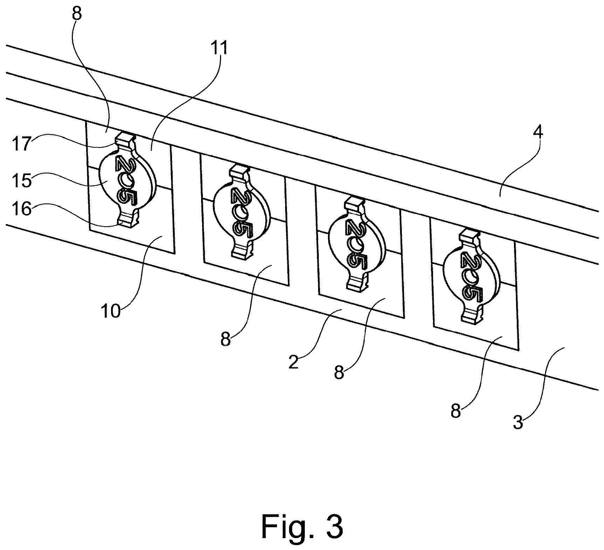

With reference to figures 1, 2 and 3, termination box is indicated as a whole by numeral 1. The box 1 comprises a bottom 2, a peripheral wall 3 and a lid 4 which is connected to the peripheral wall 3 by a plurality of hinges 5.

In the peripheral wall 3 a plurality of ports 6, preferably in form of openings, are provided each for giving access to the inside of the termination box 1.

Each of the openings 6 comprises a respective seat 7 for housing a respective port sealing device depicted as a whole with numeral reference 8.

An optical cable 9 is shown passing through one of the openings 6 by means of the port sealing device 8.

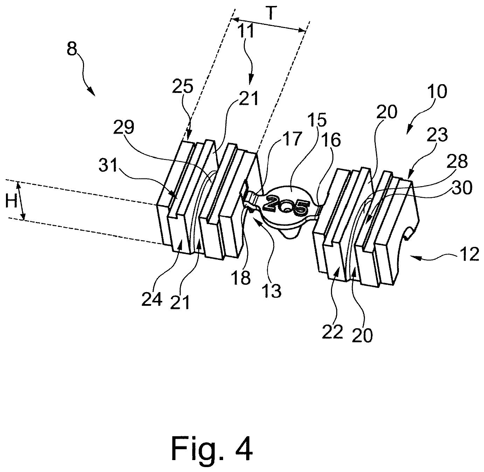

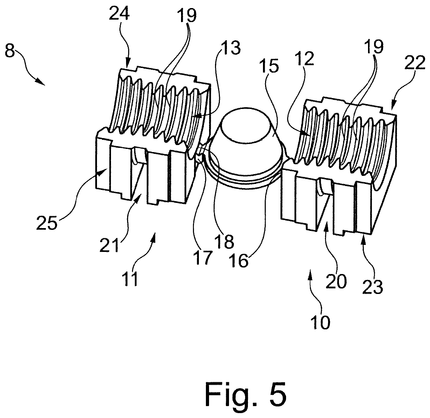

With reference to figures 4 and 5, a first embodiment of the port sealing device 8 is shown.

The port sealing device 8 comprises a first body 10 and a second body 11 defining a passage there between when the bodies 10,11 are placed one on the other.

The first body 10 and the second body 11 have each a thickness T between 9 mm and 15 mm, preferably about 12 mm, and a height H between 7 mm and 12 mm, preferably about 9 mm.

The first and second bodies 10,11 are shaped as parallelepiped, each body being provided on a face thereof with an outwardly open channel 12,13 axially extending through the entire thickness of each body.

The first and second bodies 10,11, when positioned in the seat 7 of an opening 6, rest one on the other with the respective open channels 12,13 faced one another forming a passage 14 the cross section of which is having a size configured to receive and firmly house an optical cable 9.

A removable plug 15, for sealing the passage 14, is connected to the first and second bodies 10,11 by means of flexible and frangible bridges 16,17 which extend from the plug 15 to the respective body 10,11 along opposite directions.

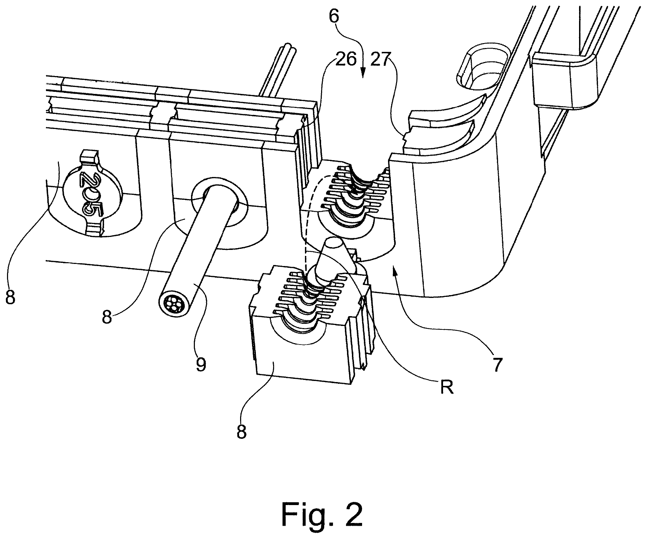

The flexible and frangible bridges 16,17, connecting the plug 15 to the first and second bodies 10,11, are configured to allow an angular movement of the plug 15 with respect to each one of the bodies 10,11, of at least 90°, preferably along the circular direction R shown in the example of figure 2.

In order to facilitate the removal of the plug 15 from the bodies 10,11, when the sealed port has to be opened for housing the optical cable 9, the flexible and frangible bridges 16,17 may comprise at least one stress raiser 18.

According to a preferred embodiment shown in the example of figure 5, the outwardly open channels 12,13 have an inner surface shaped with a plurality of flexible indentations 19 which, preferably, are axially distributed over the entire length of the channels 12, 13.

The first and second bodies 10,11 comprise slots 20,21 on both sides 22,23 and 24,25. Preferably, each slot 20,21 extends parallel to the axial extension of the respective outwardly open channel 12,13 and partially along the height H of the bodies 10,11.

The slots 20 of the first body 10 are aligned with the slots 21 of the second body 11 when the bodies are placed one on the other in the seat 7 of the opening 6.

With reference to the example shown in figure 2, the peripheral wall 3 of the termination box 1 has a thickness T for housing the first and second bodies 10,11 when the bodies 10,11 are placed one on the other in the seat 7 of the opening 6.

In order to guide the port sealing device 8 when inserted in the peripheral wall 3 of the termination box 1, the seat 7 comprises opposed ribs 2627, mating the slots 20,21 of the bodies 10,11.

Advantageously, as shown in the example of figure 4, for securing the port sealing device 8 in the peripheral wall 3 of the box 1, the bodies 10,11 comprise at least one slot 28,29 on the sides 30,31 opposed to the respective outwardly open channel 12,13 and designed to cooperate with the the lid 4 of the termination box 1. The lid 4 comprises projection elements 32, as shown for example in figure 1, mating said slot 28 or 29, depending on which body 10 or 11 is mounted in the opening 6 facing the lid 4, when the lid 4 rests on the peripheral wall 3 of the termination box 1.

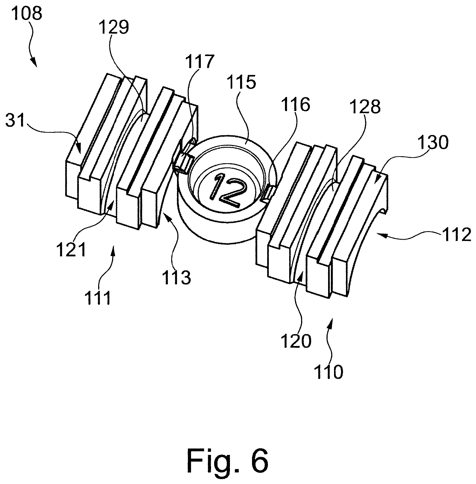

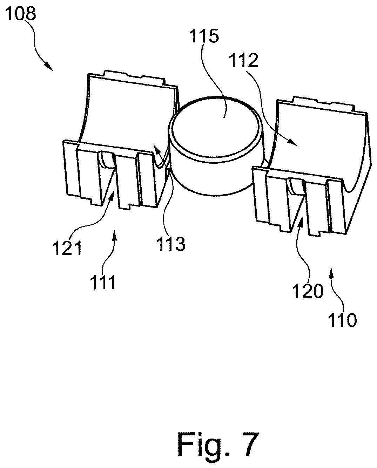

With reference to figures 6 and 7, it is shown a second embodiment of the port sealing device according to the invention. The features of this second embodiment of the port sealing device correspond to the equivalent features of the first embodiment of figures 4 and 5 indicated by the same numeral references increased by 100.

It should be noted that the cross section of the plug 115 is greater than that of plug 15 of the first embodiment in order to seal a passage formed by channels 112 and 113 having a cross section suitable to house an optical cable having a cross section greater than that of cable 9.

Moreover it should be noted that the inner surface of channels 112 and 113 has no indentations.

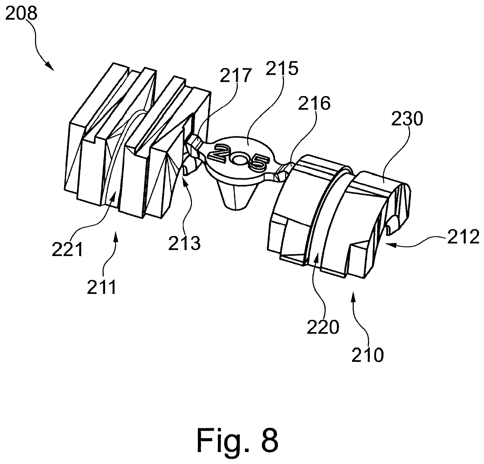

With reference to figure 8 showing a third embodiment of the port sealing device according to the invention, the features which correspond to the equivalent features of the first embodiment of figures 4 and 5 are indicated by the same numeral references increased by 200.

While the second body 211 is shaped as parallelepiped, the outer surface of the first body 210 is curved.

Use of the assembly it will be described here below.

When a port sealing device 8 is mounted inside an opening 6 formed in the peripheral wall 3 of a termination box 1, with the bodies 10 an 11 placed one over the other, the plug 15 is kept between the two bodies and provides a tight seal to the port of the box 1.

The lid 4 of the box 1 cooperates with the sealing device 8 to keep the sealing devices 8 in its position in the opening 6 due to the engagement of the projection element 32 inside the slot 28 or 29, depending on which body 10 or 11 is mounted in the opening 6 facing the lid 4.

In case of use of a port of the termination box, after having raised the lid 4, the bodies 10 and 11 of the sealing device of the selected port are detached from the plug 15 without the need of any tool because the flexible and frangible bridges 16 and 17 can be easily broken manually by the operator due to the presence of a stress raiser 18 in at least one of the bridges.

One of the bodies 10 and 11 remains located in the seat 7 of the opening 6 by engagement of the ribs 26, 27 with the slots 20 or 21 and the cable 9 already connected to its terminal is transversely placed in the open channel 12 or 13. The other body 11 or 10 is placed over the body already present in the seat 7 retaining the cable 9 lying inside the passage formed by the opposed open channels 12 and 13.

By tilting the lid 4 around the hinges 5, the box 1 is closed and the sealing of all the ports in use and not in use is provided because all of the port sealing devices 8 result to be pressed by the lid 4 and particularly by its projecting elements 32 engaging the slots 28 or 29 depending on which body is facing the lid 4.

The material used for manufacturing the port sealing device 8 may be rubber or any other elastically deformable material, natural or synthetic.

## Claims

1. A port sealing device (8) for housing an optical cable (9) when passing through a peripheral wall (3) of a termination box (1), comprising:
- a first body (10, 110) and a second body (11, 111) each having a thickness (T) and a height (H) defining a passage (14, 114) therebetween when the bodies are placed one on the other,
- a removable plug (15, 115) sealing said passage (14, 114),
- flexible and frangible bridges (16, 17, 116, 117) connecting said plug (15, 115) to said first and second bodies,
**characterized in that** said flexible and frangible bridges (16, 17, 116, 117) are configured to allow an angular movement of the plug with respect to each one of the bodies of at least 90°.

2. The port sealing device (8) according to claim 1, wherein said bridges (16, 17, 116, 117) extend from the plug to the respective body along opposite directions.

3. The port sealing device (8) according to claim 1 or 2, wherein each body is provided on a face thereof with an outwardly open channel (12, 13, 112, 113) axially extending through the entire thickness (T) of the body.

4. The port sealing device (8) according to claim 3, wherein said first and second bodies, when resting one on the other with the respective open channels facing one another, form said passage (14, 114).

5. The port sealing device (8) according to any one of claims 3 and 4, wherein said outwardly open channels (12, 13) have an inner surface which is shaped with a plurality of flexible indentations (19).

6. The port sealing device (8) according to any one of claims 3 to 5, wherein the cross section of the passage (14, 114), when formed by said outwardly open channels (12, 13, 112, 113), has a size configured to receive an optical cable (9).

7. The port sealing device (8) according to any one of the claims 1 to 6, wherein said flexible and frangible bridges (16, 17, 116, 117) comprise at least one stress raiser (18).

8. An optical cable termination box (1) having a bottom (2), a lid (4) and a peripheral wall (3), the optical cable termination box (1) comprising:
- a port sealing device (8) according to any one of the claims 1 to 7,
- at least one opening (6) formed in at least a portion of said peripheral wall (3) of the termination box (1), and
- a seat (7) formed in said at least one opening (6) for housing said first body (10, 110) and said second body (11, 111) when said first body (10, 110) and said second body (11, 111) are placed one on the other inside said at least one opening (6).

9. The optical cable termination box (1) according to claim 8 when dependent on claim 5, wherein said indentations (19) are axially distributed on the inner surface of each channel (12, 13).

10. The optical cable termination box (1) according to claim 8 when dependent on claim 3, wherein said first and second bodies (10, 11, 110, 111) comprise at least one first slot (20, 21, 120, 121) on both sides which extend parallel to the axial extension of the respective outwardly open channel (12, 13, 112, 113), said at least one first slot (20, 21, 120, 121) extending along the height (H) of the bodies, and wherein the peripheral wall (3) of the termination box (1) has a thickness (T) for housing said first and said second bodies (10, 11, 110, 111) when said bodies are placed one on the other in said seat (7), said seat (7) comprising ribs (26, 27) mating said first slots (20, 21, 120, 121) of said bodies.

11. The optical cable termination box (1) according to claim 10, wherein the first slots (20, 120) of the first body (10, 110) are aligned with the first slots (21, 121) of the second body (11, 111) when the bodies are placed one on the other in said seat (7).

12. The optical cable termination box (1) according to claim 8 when dependent on claim 3, wherein said first and second bodies (10, 11, 110, 111) comprise at least one second slot (28, 29, 128, 129) on the side opposed to the respective outwardly open channel (12, 13, 112, 113), and wherein said lid (4) of the termination box (1) comprises projection elements (32) mating said second slot (28, 29, 128, 129) when the lid (4) rests on the peripheral wall (3) of the termination box (1).

## Patentansprüche

1. Eine Dichtungstülle (8) zur Unterbringung eines optischen Kabels (9), wenn dieses durch eine umlaufende Wandung (3) einer Verbindungsdose (1) geführt wird, umfassend:
- einen ersten Körper (10, 110) und einen zweiten Körper (11, 111), die jeweils eine Dicke (T) und eine Höhe (H) aufweisen, wobei sich zwischen den Körpern ein Durchgang (14, 114) befindet, wenn die Körper aufeinander platziert sind,
- einen entfernbaren Stopfen (15, 115), der den Durchgang (14, 114) verschließt,
- flexible und zerbrechliche Brücken (16, 17, 116, 117), die den Stecker (15, 115) mit dem ersten und zweiten Körper verbinden, **dadurch gekennzeichnet, dass** die flexiblen und zerbrechlichen Brücken (16, 17, 116, 117) so konfiguriert sind, dass eine Winkelbewegung des Steckers in Bezug auf jeden der Körper von mindestens 90° möglich ist.

2. Dichtungstülle (8) nach Anspruch 1, wobei sich die Brücken (16, 17, 116, 117) vom Stopfen zum jeweiligen Körper in entgegengesetzten Richtungen erstrecken.

3. Dichtungstülle (8) nach Anspruch 1 oder 2, wobei jeder Körper auf einer seiner Flächen einen nach außen offenen Kanal (12, 13, 112, 113) aufweist, der sich axial durch die gesamte Dicke (T) des Körpers erstreckt.

4. Dichtungstülle (8) nach Anspruch 3, wobei die ersten und zweiten Körper, wenn sie mit den jeweiligen offenen Kanälen aufeinander ruhen und einander zugewandt sind, den Durchgang bilden (14, 114).

5. Dichtungstülle (8) zum Abdichten von Öffnungen nach einem der Ansprüche 3 und 4, wobei die nach außen offenen Kanäle (12, 13) eine Innenfläche aufweisen, die mit einer Vielzahl von flexiblen Einbuchtungen (19) geformt ist.

6. Dichtungstülle (8) nach einem der Ansprüche 3 bis 5, wobei der Querschnitt des Durchgangs (14, 114), wenn er von den nach außen offenen Kanälen (12, 13, 112, 113) gebildet wird, eine Größe hat, die zur Aufnahme eines optischen Kabels (9) ausgebildet ist.

7. Dichtungstülle (8) nach einem der Ansprüche 1 bis 6, wobei die flexiblen und zerbrechlichen Brücken (16, 17, 116, 117) mindestens einen Spannungserhöher (18) umfassen.

8. Eine optische Verbindungsdose (1) für ein optisches Kabel mit einem Boden (2), einem Deckel (4) und einer umlaufenden Wandung (3), wobei die Verbindungsdose (1) für ein optisches Kabel umfasst:
- eine Dichtungstülle (8) nach einem der Ansprüche 1 bis 7,
- mindestens eine Öffnung (6), die in mindestens einem Teil der umlaufenden Wandung (3) des Anschlusskastens (1) ausgebildet ist, und
- einen Sitz (7), der in der mindestens einen Öffnung (6) ausgebildet ist, um den ersten Körper (10, 110) und den zweiten Körper (11, 111) aufzunehmen, wenn der erste Körper (10, 110) und der zweite Körper (11, 111) innerhalb der mindestens einen Öffnung (6) übereinander angeordnet sind.

9. Optische Verbindungsdose (1) für ein optisches Kabel nach Anspruch 8, wenn abhängig von Anspruch 5, wobei die Einkerbungen (19) axial auf der Innenfläche jedes Kanals (12, 13) verteilt sind.

10. Optische Verbindungsdose (1) für ein optisches Kabel nach Anspruch 8, wenn abhängig von Anspruch 3, wobei der erste und der zweite Körper (10, 11, 110, 111) mindestens einen ersten Schlitz (20, 21, 120, 121) an beiden Seiten aufweisen, der sich parallel zur axialen Ausdehnung des jeweiligen nach außen offenen Kanals (12, 13, 112, 113) erstreckt, und wobei sich der mindestens eine erste Schlitz (20, 21, 120, 121) entlang der Höhe (H) der Körper erstreckt, und wobei die umlaufende Wandung (3) des Abschlusskastens (1) eine Dicke (T) zur Aufnahme des ersten und des zweiten Körpers (10, 11, 110, 111) aufweist, wenn die Körper in dem Sitz (7) übereinander angeordnet sind, und wobei der Sitz (7) Rippen (26, 27) aufweist, die mit den ersten Schlitzen (20, 21, 120, 121) der Körper zusammenpassen.

11. Optische Verbindungsdose (1) für ein optisches Kabel nach Anspruch 10, wobei die ersten Schlitze (20, 120) des ersten Körpers (10, 110) an den ersten Schlitzen (21, 121) des zweiten Körpers (11, 111) ausgerichtet sind, wenn die Körper in dem Sitz (7) aufeinander gesetzt werden.

12. Optische Verbindungsdose (1) für optische Kabel nach Anspruch 8, wenn abhängig von Anspruch 3, wobei der erste und der zweite Körper (10, 11, 110, 111) mindestens einen zweiten Schlitz (28, 29, 128, 129) auf der gegenüberliegenden Seite des jeweiligen nach außen offenen Kanals (12, 13, 112, 113) aufweisen, und wobei der Deckel (4) des Abschlusskastens (1) Vorsprungselemente (32), die mit dem zweiten Schlitz (28, 29, 128, 129) zusammenpassen, wenn der Deckel (4) auf der umlaufenden Wandung (3) der Verbindungsdose (1) ruht, umfasst.

## Revendications

1. Dispositif de fermeture d'orifice (8) pour recevoir un câble optique (9) lorsqu'il traverse une paroi périphérique (3) d'un boîtier de terminaison (1), comprenant :
- un premier corps (10, 110) et un second corps (11, 111) ayant chacun une épaisseur (T) et une hauteur (H) définissant un passage (14, 114) entre eux lorsque les corps sont placés l'un sur l'autre,
- un bouchon amovible (15, 115) fermant ledit passage (14, 114),
- des ponts flexibles et cassables (16, 17, 116, 117) reliant ledit bouchon (15, 115) auxdits premier et second corps,
**caractérisé en ce que** lesdits ponts flexibles et cassables (16, 17, 116, 117) sont configurés pour autoriser un mouvement angulaire du bouchon par rapport à chacun des corps d'au moins 90°.

2. Dispositif de fermeture d'orifice (8) selon la revendication 1, dans lequel lesdits ponts (16, 17, 116, 117) s'étendent du bouchon au corps respectif le long de directions opposées.

3. Dispositif de fermeture d'orifice (8) selon la revendication 1 ou 2, dans lequel chaque corps est muni sur l'une de ses faces d'un canal ouvert vers l'extérieur (12, 13, 112, 113) s'étendant axialement à travers la totalité de l'épaisseur (T) du corps.

4. Dispositif de fermeture d'orifice (8) selon la revendication 3, dans lequel lesdits premier et second corps, lorsqu'ils reposent l'un sur l'autre avec les canaux ouverts respectifs se faisant face l'un à l'autre, forment ledit passage (14, 114).

5. Dispositif de fermeture d'orifice (8) selon l'une quelconque des revendications 3 et 4, dans lequel lesdits canaux ouverts vers l'extérieur (12, 13) ont une surface interne qui est façonnée avec une pluralité d'indentations flexibles (19).

6. Dispositif de fermeture d'orifice (8) selon l'une quelconque des revendications 3 à 5, dans lequel la section transversale du passage (14, 114), lorsqu'il est formé par lesdits canaux ouverts vers l'extérieur (12, 13, 112, 113), a une taille configurée pour recevoir un câble optique (9).

7. Dispositif de fermeture d'orifice (8) selon l'une quelconque des revendications 1 à 6, dans lequel lesdits ponts flexibles et cassables (16, 17, 116, 117) comprennent au moins un concentrateur de contraintes (18).

8. Boîtier de terminaison de câble optique (1) ayant un fond (2), un couvercle (4) et une paroi périphérique (3), le boîtier de terminaison de câble optique (1) comprenant :
- un dispositif de fermeture d'orifice (8) selon l'une quelconque des revendications 1 à 7,
- au moins une ouverture (6) formée dans au moins une partie de ladite paroi périphérique (3) du boîtier de terminaison (1), et
- un siège (7) formé dans ladite au moins une ouverture (6) pour recevoir ledit premier corps (10, 110) et ledit second corps (11, 111) lorsque ledit premier corps (10, 110) et ledit second corps (11, 111) sont placés l'un sur l'autre à l'intérieur de ladite au moins une ouverture (6).

9. Boîtier de terminaison de câble optique (1) selon la revendication 8 lorsque prise en dépendance de la revendication 5, dans lequel lesdites indentations (19) sont réparties de manière axiale sur la surface interne de chaque canal (12, 13).

10. Boîtier de terminaison de câble optique (1) selon la revendication 8 lorsque prise en dépendance de la revendication 3, dans lequel lesdits premier et second corps (10, 11, 110, 111) comprennent au moins une première fente (20, 21, 120, 121) sur les deux côtés qui s'étendent parallèlement à l'extension axiale du canal ouvert vers l'extérieur (12, 13, 112, 113) respectif, ladite au moins une première fente (20, 21, 120, 121) s'étendant le long de la hauteur (H) des corps, et dans lequel la paroi périphérique (3) du boîtier de terminaison (1) a une épaisseur (T) pour recevoir lesdits premier et second corps (10, 11, 110, 111) lorsque lesdits corps sont placés l'un sur l'autre dans ledit siège (7), ledit siège (7) comprenant des nervures (26, 27) s'accouplant avec lesdites premières fentes (20, 21, 120, 121) desdits corps.

11. Boîtier de terminaison de câble optique (1) selon la revendication 10, dans lequel les premières fentes (20, 120) du premier corps (10, 110) sont alignées avec les premières fentes (21, 121) du second corps (11, 111) lorsque les corps sont placés l'un sur l'autre dans ledit siège (7).

12. Boîtier de terminaison de câble optique (1) selon la revendication 8 lorsque prise en dépendance de la revendication 3, dans lequel lesdits premier et second corps (10, 11, 110, 111) comprennent au moins une seconde fente (28, 29, 128, 129) sur le côté opposé au canal ouvert vers l'extérieur (12, 13, 112, 113) respectif, et dans lequel ledit couvercle (4) du boîtier de terminaison (1) comprend des éléments de projection (32) s'accouplant avec ladite seconde fente (28, 29, 128, 129) lorsque le couvercle (4) repose sur la paroi périphérique (3) du boîtier de terminaison (1).
